# EUROPEAN PATENT SPECIFICATION

(11) **EP 2 721 206 B1**
(45) Date of publication and mention of the grant of the patent: **03.08.2016**
(21) Application number: 12726116.2
(22) Date of filing: 06.06.2012
(51) Int. Cl.: D03D 47/30, G05D 16/16

(54) **AIR SUPPLY SYSTEM FOR AN AIRJET WEAVING MACHINE**
LUFTZUFUHRSYSTEM FÜR EINE LUFTDÜSENWEBMASCHINE
SYSTÈME D'APPROVISIONNEMENT EN AIR POUR UNE MACHINE À TISSER À JET D'AIR

(30) Priority: 15.06.2011 BE 201100354; 15.06.2011 BE 201100355; 15.06.2011 BE 201100356
(43) Date of publication of application: 23.04.2014
(73) Proprietor: Picanol, 8900 Ieper (BE)
(72) Inventor: PEETERS, Jozef, B-8900 Ieper (BE); MAERTENS, Koen, B-8670 Oostduinkerke (BE)
(74) Representative: Patentanwälte Ruff, Wilhelm, Beier, Dauster & Partner mbB
(86) International application number: PCT/EP2012/060725
(87) International publication number: WO 2012/171840

(56) References cited:
- EP-A2- 0 112 145
- JP-A- 3 082 848
- JP-B- 7 100 898

## Description

### Technical Field

The invention relates to an air supply system for an airjet weaving machine comprising a pressure regulator. The invention further relates to a method for supplying compressed air to a blowing device of an airjet weaving machine with an air supply system comprising a pressure regulator.

### Prior Art

In airjet weaving machines, it is known to regulate the flow of compressed air coming from a compressed air source, such as a compressor or an airtank, and supplied to a blowing device for inserting a weft thread using a pressure regulator to match the actual flow of compressed air to the demand for compressed air. The actual flow of compressed air is regulated by the pressure regulator in such way, that an output pressure of the pressure regulator is kept substantially constant in order to achieve a reliable weft thread insertion within the time interval that a weaving shed, formed by warp threads, is open. Generally, the output pressure is regulated so that the inserted weft thread arrives at the opposite side of the shed before the shed closes. In particular, the output pressure is regulated so that the weft thread moves with a sufficient speed in order to arrive at the opposite side of the shed and to arrive on the expected arrival moment. The output pressure can be set in advance, for example depending on the kind of weft thread to be inserted, or can be adapted during weaving, for example depending on the moment of arrival of weft threads at the opposite side of the shed.

An air supply system for supplying compressed air to a blowing device of an airjet weaving machine is known for example from US 5,970,996. According to US 5,970,996 two main blowing devices are each connected by a first branch to a compressed-air source feeding high-pressure compressed air for purposes of a weft thread insertion, wherein compressed air coming from the compressed-air source is fed via a pressure regulator to a buffer airtank.

JP 2931080 B2 describes a pressure regulator device for weaving machines arranged between a main tank and a buffer airtank arranged downstream of the main tank, wherein the pressure regulator device comprises a motor controlled pressure regulator having a diaphragm actuator with a diaphragm loaded by a pressure regulating spring. A force of the pressure regulating spring is set using a motor. For adjusting an output pressure the setting of the pressure regulating spring is adapted. In order to compensate the influences due to the compressed airflow through the pressure regulator on the output pressure of the pressure regulator at a setting of the pressure regulating spring, a feed-back control using pressure sensors is provided, wherein the pressure sensors measure the pressure at the buffer airtank arranged downstream of the outlet of the pressure regulator and wherein the setting of the pressure regulating spring is adjusted accordingly in order to obtain the desired output pressure.

JP 7-100898 B2 discloses the use of a pilot pressure regulator in an air supply system for a weaving machine. The pilot controlled pressure regulator comprises a bypass at an inlet and a diaphragm actuator that is loaded by a feed pressure, which feed pressure is balanced by an output pressure. In weaving machines the feed pressure can however vary within limits. Such variations in the feed pressure can lead to a disturbance of the pilot pressure regulator.

### Summary of the Invention

It is the object of the invention to provide an air supply system for an airjet weaving machine comprising a pressure regulator and a method for supplying compressed air to an airjet weaving machine with an air supply system, wherein a feed back control of the pressure regulator may be avoided.

This object is solved by the air supply system for an airjet weaving machine and the method for supplying compressed air to an airjet weaving machine with the features of claims 1 and 10. Preferred embodiments are defined in the dependent claims.

It is a basic idea of the invention to provide an air supply system for an airjet weaving machine comprising a first pressure regulator, in particular a pilot controlled first pressure regulator for supplying compressed air to a blowing device of a weaving machine and at least one pressure sensor arranged upstream of this pressure regulator for measuring a feed pressure at this pressure regulator, wherein an open-loop control unit is provided which is arranged for regulating a control variable of this pressure regulator in dependence of calibration data and preferably the measured feed pressure.

It is a basic idea of the invention to provide a pilot pressure for the first pressure regulator, which pilot pressure is defined by a control variable, for example the position of the motor of a second pressure regulator, for setting or adjusting the output pressure of the pilot controlled first pressure regulator. Herein a control unit is used using calibration data, which calibration data establish the relation between the control variable and the output pressure of the first pressure regulator, to allow to control the output pressure via this control variable, this means to set, to regulate or to adjust. According to the invention the control unit preferably is an open-loop control unit wherein the output pressure at the pilot controlled pressure regulator is not measured and thus is controlled in open-loop.

If in the description the term "pressure regulator" is described, the first pressure regulator for supplying compressed air to a blowing device is meant, unless it is indicated otherwise or appears otherwise from the context.

In the context of the application, the term "feed pressure" is defined as the pressure prevailing in a feed line to the pressure regulator, and the term "output pressure" is defined as the pressure prevailing at an outlet of the pressure regulator.

In weaving mills, when the feed pressure is chosen at 5,5 bar, for example pressure variations in feed pressure between 5,8 and 5,3 bar may occur, for example due to pressure variations within limits at a compressor used as a compressed air source caused by an ON/OFF control of the compressor, due to changes in the number of active compressors, in cases that several compressors are used in parallel as a compressed air source, due to pressure losses in supply ducts such as distribution ducts that are dependent on an airflow there through, due to changes in the number of active weaving machines, for example caused by weaving machines that have been stopped because of an error or for another reason, such as maintenance, due to electric voltage changes in an electric feed line to the compressor, due to air filters that become dirty resulting in a lower airflow there through, or due to other reasons.

Because of changes in the feed pressure, the feed pressure may decrease below a desired output pressure at the pressure regulator. This may result in the inserted weft thread arriving later at an opposite side of the shed. Since the late arrival is due to a decrease in the feed pressure, in most cases the late arrival cannot be compensated by an increase of the desired output pressure at the pressure regulator.

By arranging a pressure sensor for measuring the pressure in the feed line upstream of the pressure regulator, the pressure regulator can be adjusted when the feed pressure changes or when the feed pressure drops below a boundary value for pressure that is for example related to a desired output pressure of the pressure regulator.

In particularly, according to a preferred embodiment, it is avoided that the late arrival due to a decrease in feed pressure leads to a control resulting in a not realisable increase of the desired output pressure or at least such an increase is kept small. Therefore, when the feed pressure subsequently increases again, the desired output pressure at the pressure regulator still approximately matches the weaving conditions.

The advantages are an easy control device and method, in particular in case the feed pressure of the compressed air source drops to a value lower than a desired value for the output pressure, for example a desired pressure in a buffer airtank.

In addition, in case several buffer airtanks with associated blowing devices are supplied with compressed air from a common compressed air source via pressure regulators, one pressure sensor for measuring the feed pressure upstream of the pressure regulators may be sufficient, instead of several pressure sensors each associated to each buffer airtank. Consequently, in preferred embodiments, no pressure sensors are provided at the buffer airtanks. Hence, the complexity of the air supply system is reduced. It is to be understood that without the use of pressure sensors the exact pressure in each buffer airtank is not known. However, due to the open-loop control the pressure is known approximately, which is sufficient for most operations.

In one embodiment, a pressure regulator is set to a maximum for allowing a maximum throughflow in case the feed pressure in the feed line is lower than a preset minimal value. In other embodiments, random variations in the feed pressure are compensated.

According to one embodiment the air supply system further comprises an apparatus for determining an airflow through the pressure regulator, wherein the open-loop control unit is arranged for regulating a control variable of the pressure regulator in dependence of the measured feed pressure and the airflow determined. By considering the airflow through the pressure regulator, an unwanted decrease of an output pressure due to an increased airflow can be avoided.

In some embodiments, the apparatus for determining an airflow through the pressure regulator is an airflow measuring device. The airflow measuring device may be provided downstream of the pressure regulator. In preferred embodiments, the airflow measuring device is arranged in the feed line of the air supply system, i.e. upstream of the pressure regulator. An embodiment of an airflow measuring device is described for example in WO 2010/046092, the contents of which is herewith incorporated by reference.

In accordance with other embodiments, the apparatus for determining an airflow through the pressure regulator comprises a calculation unit for calculating the airflow in function of measured parameters, in particular in function of the opening times of the valves to the blowing devices, of the pressure fed to the blowing devices, of the kind of nozzles of the blowing devices and of the number of blowing devices that are used. For each blowing device connected to a pressure regulator, a value for an airflow can be determined approximate in advance, for example based on previous measurements or based on formulae of airflow dynamics. The airflow through a pressure regulator may be calculated based on the base of a sum of the values for each blowing device connected to the pressure regulator. The total airflow through all pressure regulators may be measured during weaving with an airflow measurement device as described in WO 2010/046092, which measurement can be used to correct the calculated airflow through each individual pressure regulator, so that the calculated total airflow through all pressure regulators almost equals the measured total airflow.

In measurements prior to an operation of a weaving machine, data may be collected for an output pressure in dependence of a number of control variables, also named control parameters or input parameters, to the pressure regulator, a number of airflows through the pressure regulator and/or a number of feed pressures. These measurements are referred to as calibration and the collected data is also referred to as calibration data. Using the calibration data it is in return possible to determine a control variable for a measured feed pressure, a determined airflow, and a desired output pressure.

According to a preferred embodiment, the open-loop control unit comprises a storage element in which the calibration data is stored and the open-loop control unit is arranged for regulating a control variable of the pressure regulator in dependence of the measured feed pressure and/or a determined airflow and the calibration data, so that a desired output pressure is achieved. The calibration data allows an efficient open-loop control for controlling an output pressure in case no unexpected disturbances, such as defects in a supply line downstream of the pressure regulator, occur. The storage element may be an integral part of the open-loop control unit. In the context of the invention with "integral" is meant that two devices have at least one common component. In other embodiments, an external storage element is provided which is connected with the open-loop control unit by wire or wirelessly for data communication.

In accordance with a further embodiment, a setting device is provided for setting a desired output pressure in dependence of weaving conditions. In the context of the application, the term "weaving conditions" is to be understood as comprising all influences on a weft thread insertion such as a weaving speed, weft thread properties, a weaving pattern, another parameter for a weft thread insertion, as well as measurements on a weft thread insertion, such as an arrival moment of an inserted weft thread at an opposite side of a shed, an average arrival moment of a number of inserted weft threads at an opposite side of a shed, a moment when a winding leaves a prewinder, the number of weaving errors recorded, the predicted number of weaving errors and suchlike. For avoiding weaving faults, an arrival moment of a weft thread should be within certain predefined limits. The arrival moment strongly depends on the output pressure at the pressure regulator. As long as weaving is done without weaving errors and/or an arrival moment of a weft thread is within the predefined limits, an exact knowledge of the output pressure at the pressure regulator or of the feed pressure of the compressed air source is irrelevant for controlling the pressure regulator for compressed air to the blowing device. The setting device may be an integral part of the open-loop control unit. In other embodiments, an external setting device is provided which is connected with the open-loop control unit by wire or wirelessly for data communication.

The controlling of the output pressure of a pressure regulator for a main nozzle of a weaving machine influences strongly the arrival moment of a weft thread. The controlling of the output pressure of a pressure regulator for a group of relay nozzles of a weaving machine influences the arrival moment of a weft thread less, but influences mainly the stability of the weft thread during the insertion of the weft thread. If the output pressure of the pressure regulator for the relay nozzles is too low, this may lead to weaving errors, while if the output pressure of the pressure regulator for the relay is too high, this may mainly lead to a higher consumption of air.

According to another embodiment, the setting device comprises a relational operator unit for comparing a measured feed pressure to the set desired output pressure and for detecting a drop of the feed pressure below the set desired output pressure and the setting device is arranged to adjust a control method for the desired output pressure of the pressure regulator if a drop of the feed pressure below the set desired output pressure is detected, so that the not realisable desired output pressure at a pressure regulator is not adapted any more or is only adapted within limits. This increases a stability of the air supply system.

According to an embodiment, the pressure regulator is a pilot controlled pressure regulator with a settable pilot pressure. In a pilot controlled pressure regulator, a valve element is arranged for reciprocal movement by an actuator, which actuator is loaded by the load by the control pressure, also referred to as pilot pressure, against the load by the output pressure. The term "load" means in the context of this invention a force exerted due to a pressure. The load generally depends of the effective surface on which the pressure acts. The output pressure of the pressure regulator remains essentially constant for a chosen or set pilot pressure, irrespective of an airflow through the pilot controlled pressure regulator. Further, a force element, for example a spring may be provided for keeping the pressure regulator closed in case no airflow flows through the regulator or no pilot pressure is applied. The force of the force element may be chosen small and suspensions may be kept to a minimum in order to avoid non-linearities, so that forces applied by the spring are substantially constant. In case of an increased airflow, in other words an increased demand of air, an output pressure at the outlet of the pressure regulator decreases, in response to which the valve element is moved until the output pressure at the outlet of the pressure regulator reaches again a desired value. As in contrast to pressure regulators which are set using a pressure regulating spring, in which a moving of the valve element corresponds to a change in length of the pressure regulating spring and results in a changed load by the pressure regulating spring, the moving of the valve element of a pilot-controlled pressure regulator does not influence the load by the control pressure or pilot pressure. Therefore, an output pressure at the outlet of the pressure regulator is essentially independent from the quantity of air flowing through the pressure regulator. This is very advantageous in weaving machines, in particular in case of the changing of the airflow through the pressure regulator due to changes in the control times of valves or due to transitions between periods wherein valves are or are not controlled, for example transitions between periods wherein weft thread is inserted and periods wherein no weft thread is inserted.

Further, a regulation of the airflow through the pressure regulator is independent of a regulation of the set pilot pressure. This allows to weave at any speed and with any weft insertion pattern for weft threads.

According to an embodiment, close to the pilot controlled first pressure regulator, a second pressure regulator is provided for regulating the settable pilot pressure of the pilot controlled first pressure regulator, wherein preferably the pilot pressure is set lower than a feed pressure to the pilot controlled first pressure regulator. As explained above, in weaving mills the feed pressure of the compressed air source fed to the weaving machines may change in time. In order to avoid that pressure variations in the feed pressure result in a variation of the pilot pressure and therefore in a setting of the actuator, the pilot pressure is regulated by the second pressure regulator to a pressure lower than the minimum expected feed pressure, for example to a pressure between 2,5 bar and 3,5 bar.

In one embodiment, the second pressure regulator for regulating the pilot pressure is a motor controlled pressure regulator. The second pressure regulator is preferably small in dimension and an airflow through the second pressure regulator is comparatively low, so that a fast control is possible and influences due to for example load changes due to spring force changes due to a changing airflow in the second pressure regulator are negligible. The motor controlled second pressure regulator comprises in one embodiment a throttle valve, wherein a throttling gap of the throttle valve is set by a motor, in particular a stepper motor. According to an embodiment, the position of the motor of the motor controlled second pressure regulator is a control variable for the pilot controlled first pressure regulator. In another embodiment, as second pressure regulator a motor controlled second pressure regulator as described in US 4,627,459 is used, wherein the content of US 4,627,459 is herewith incorporated by reference. In this case, the motor can be a steppermotor. In addition, or as an alternative, the motor controlled second pressure regulator comprises a transmission mechanism with a lever for a transmission of a movement of a motor shaft to a setting element of the second pressure regulator. This allows the motor to be kept small in size.

According to another preferred embodiment, a force enlarging device is provided, for enlarging the load exerted by the pilot pressure on the actuator. In other words the load by the pilot pressure acting on the actuator of the first pilot controlled pressure regulator is increased. The resulting load is balanced by the output pressure and, if applicable, a spring. Therefore the output pressure of the first pilot controlled pressure regulator is higher than the pilot pressure to the first pilot controlled pressure regulator which is determined by the second pressure regulator. In particular, when a low control pressure or pilot pressure is used, such a force enlarging device is advantageous. The force enlarging device allows a relatively high output pressure, with a pilot pressure which is relatively low and is lower than the feed pressure, irrespective of variations in the feed pressure coming from a compressed air source, which feed pressure for example varies between 5.3 bar and 5.8 bar

In one embodiment, the force enlarging device is at least partially an integral component of a diaphragm actuator of the pilot controlled first pressure regulator. In other words the force enlarging device and the actuator have at least one common component. This allows for a pressure regulator small in size. This allows to arrange several pressure regulators adjacent to each other in a small space. In this case the output pressure of the pilot controlled first pressure regulator can be equal to the feed pressure of the pilot controlled first pressure regulator.

A diaphragm of the diaphragm actuator may for example as well be formed by a diaphragm formed as a membrane, for example a bellows-like membrane of which the edges are clamped, as by a diaphragm formed as a disc. In case of a disc, at the edges of the disc a sealing may be provided and the disc may for example move together with the seal in a housing, for example shift in a housing.

The object is further solved by a method for supplying compressed air to an airjet weaving machine with an air supply system comprising a pressure regulator and at least one pressure sensor arranged upstream of the pressure regulator, wherein a feed pressure to the pressure regulator is measured and a control variable to the pressure regulator is adjusted at least in dependence of the measured feed pressure.

Preferably, further an airflow through the pressure regulator is determined and the control variable to the pressure regulator is adjusted in dependence of the measured feed pressure and the airflow determined.

In another embodiment, the air supply system is calibrated for determining values for an output pressure in dependence of a number of feed pressures, a number of airflows and/or a number of control variables to the pressure regulator, wherein calibration data is stored and the calibration data is used for determining the control variable to the pressure regulator in dependence of the measured feed pressure and/or a determined airflow and the calibration data, so that a desired output pressure is achieved.

According to another embodiment, weaving conditions are determined and a desired output pressure is matched to the weaving conditions. Preferably, a measured feed pressure is compared to the desired output pressure and, if a drop of the measured feed pressure below the set desired output pressure is detected, the value of the desired output pressure is not adapted any more or is only adapted within limits in function of the weaving conditions. This means that when a drop of the feed pressure below the set desired output pressure is detected, the pilot pressure for the first pilot controlled pressure regulator is not changed anymore or changed only within limits in dependence of the weaving conditions. Because of this the actual output pressure remains almost equal to the feed pressure, so that if the feed pressure increases again, the output pressure does not become undesirably high.

In a further embodiment the different pressures in the air supply system, for example the pressure in each buffer airtank, are displayed on a display unit of the weaving machine. Applying a pressure sensor for measuring the feed pressure, calibration data and an open-loop control unit in this case allow for example that an operator of weaving machines is able to compare the weaving pressures, such as the pressures with which a weft thread is inserted, of different weaving machines in an easy way and with a reasonable accuracy without using pressure sensors in the different buffer airtanks.

In still another embodiment, the pressure regulator, in this case the first pressure regulator, is a pilot controlled pressure regulator or pilot controlled first pressure regulator, wherein a pilot pressure is adjusted at least in dependence of the measured feed pressure. Preferably, a motor controlled second pressure regulator is provided for adjusting the pilot pressure for the first pressure regulator and a control variable for the motor controlled second pressure regulator is adjusted at least in dependence of the measured feed pressure.

The invention offers the advantage that a reasonably reliable relation is established between on the one hand the pilot pressure of the pilot controlled first pressure regulator, which is for example determined by the position of a stepper motor of the second pressure regulator, and on the other hand the output pressure of the pilot controlled first pressure regulator. The pressure sensor for the feed pressure allows to compensate small deviations concerning this relation. In case the feed pressure decreases below a certain value, the influence thereof can be compensated for or signalled. Determining the airflow, more in particular the flow of the airflow, also allows to compensate small deviations concerning this relation, more in particular deviations due to pressure drops in the feed line due to the flow. For the invention it is important that a reliable, stable and reasonable relation is established between the output pressure of the pilot controlled first pressure regulator and the position of the stepper motor of the second pressure regulator defining the pilot pressure to the pilot controlled first pressure regulator. The signals of the pressure sensor and the determination of the airflow may influence this relation. The position of the stepper motor of the second pressure regulator is however the control variable for the output pressure of the pilot controlled first pressure regulator.

If several weaving machines are coupled to a central control unit, by means of the different pressure measurements, pressure differences in the supply lines to the different weaving machines can be exposed by means of different pressure measurements. This allows to detect irregularities at certain supply lines and or pollution of the air filter.

### Brief Description of the Drawings

In the following, embodiments of the invention will be described in detail based on several schematic drawings. Throughout the drawings, the same or similar elements will be denoted by the same reference numerals.
- Fig. 1: is a schematic view of an air supply system for an airjet weaving machine comprising a pilot controlled first pressure regulator, a motor controlled second pressure regulator and a manually adjustable third pressure regulator;
- Fig. 2: is a schematic view of a cross section of an embodiment of a pilot controlled first pressure regulator;
- Fig. 3: is a schematic view of a cross section of a variant of the pilot controlled first pressure regulator from fig. 2;
- Fig. 4: is a schematic view of a cross section of yet a further variant of the pilot controlled first pressure regulator from fig. 2;
- Fig. 5: is a schematic view of a cross section of a motor controlled second pressure regulator;
- Fig. 6: is a schematic view of a cross section of a variant of the motor controlled second pressure regulator from fig. 5;
- Fig. 7: is a schematic view of a cross section of an embodiment of a pilot controlled first pressure regulator into which a motor controlled second pressure regulator is integrated;
- Fig. 8: is a schematic view of a cross section of yet a further variant of the pilot controlled first pressure regulator of fig. 2;
- Fig. 9: is a schematic view of a cross section of a variant of the pilot controlled first pressure regulator from fig. 8;
- Fig. 10: is a schematic view of an open-loop control of an air supply system, and;
- Fig. 11: is a schematic view of an air supply system according to the invention for an airjet weaving machine.

### Detailed Description of Preferred Embodiments

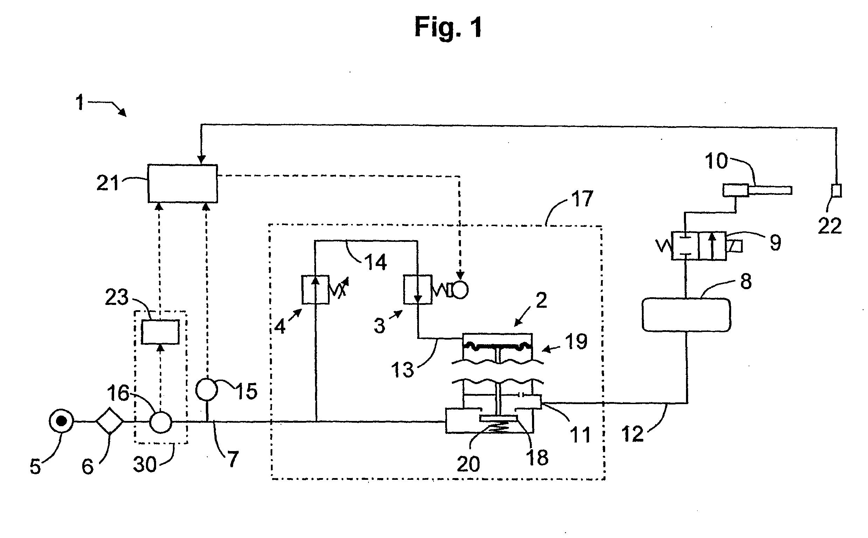

Fig. 1 shows a schematic view of an air supply system 1 for an airjet weaving machine comprising a first pressure regulator 2, a second pressure regulator 3 and a third pressure regulator 4, in particular a pilot controlled first pressure regulator 2, a motor controlled second pressure regulator 3 and a manually adjustable third pressure regulator 4. The air supply system 1 is intended for supplying compressed air from a compressed air source 5 via an air filter 6, a feed line 7, the first pressure regulator 2, a buffer airtank 8 and a valve system 9 to a blowing device 10. The pilot controlled first pressure regulator 2 is provided upstream of the buffer airtank 8 and is intended for regulating an airflow through the pressure regulator 2 so that air with a desired output pressure is supplied via a duct 12 from the outlet 11 of the pressure regulator 2 to the buffer airtank 8. The first pressure regulator 2 is arranged between the compressed air source 5 and the buffer airtank 8 and is intended for regulating the pressure in the buffer airtank 8. The buffer airtank 8 is arranged between the first pressure regulator 2 and the blowing device 10.

The first pressure regulator 2, in particular the pilot controlled first pressure regulator 2, is regulated by a pilot pressure supplied to the first pressure regulator 2. The pilot pressure for the first pressure regulator 2 is regulated using the second pressure regulator 3, in particular the motor controlled second pressure regulator 3, in order to supply compressed air at a pilot pressure via a duct 13 to the first pressure regulator 2. To the second pressure regulator 3 compressed air is fed via the third pressure regulator 4, in particular the manually adjustable third pressure regulator 4, and a duct 14. The air supply system 1 comprises a pressure sensor 15 arranged upstream of the first pressure regulator 2 for measuring a feed pressure in the feed line 7 between the compressed air source 5 and the first pressure regulator 2. The pressure sensor 15 is also arranged upstream of the second pressure regulator 3 and of the third pressure regulator 4. Further, the air supply system 1 comprises an apparatus 30 for determining an airflow through the first pressure regulator 2, in particular an airflow measuring device 16, which airflow measuring device 16 is arranged upstream of the first pressure regulator 2 in the feed line 7. The airflow measured by the airflow measuring device 16 is mainly defined by the airflow through the first pressure regulator 2, since the airflow through the second pressure regulator 3 and the third pressure regulator 4 is negligibly small. An airflow measuring device is described for example in WO 2010/046092, the content of which is herewith incorporated by reference. According to the invention a pressure regulator device 17 comprises at least the pilot controlled first pressure regulator 2. In the embodiment shown the pressure regulator device 17 comprises the pilot controlled first pressure regulator 2, the motor controlled second pressure regulator 3 and the manually adjustable third pressure regulator 4. The pressure regulator device 17 is arranged downstream of the compressed air source 5.

The first pressure regulator 2 is controlled with a settable pilot pressure as control variable. In a pilot controlled first pressure regulator 2 a valve element 18 is arranged for reciprocal movement by an actuator 19, which actuator 19 is loaded by the load applied by the pilot pressure from the second pressure regulator 3, against the load applied by the output pressure at the outlet 11. Further, a force element 20 such as a spring may be provided for forcing the pressure regulator 2 in closed state, which force element 20 can exert a small and almost constant force. The force element 20 acts in opposition to the pilot pressure on the valve element 18. The force element 20 is intended for keeping the first pressure regulator 2 closed, this means keeping the valve element 18 in closed position when no pilot pressure is applied or when no flow is demanded.

In this pilot controlled first pressure regulator 2 the valve element 18 is forced to an open position by the force exerted by the pilot pressure on the actuator 19 and to a closed position by the force exerted by the output pressure on the actuator 19. By choosing the pilot pressure sufficiently high the valve element 18 can in this case be kept in a full open position. The force element 20 forces in this case the valve element 18 to a closed position, whereby the force exerted by the force element 20 in normal use is substantially smaller than the force exerted by the pilot pressure or the force exerted by the output pressure.

The second pressure regulator 3 is motor controlled and is provided for regulating the settable pilot pressure of the pilot controlled first pressure regulator 2. As will be explained further on, the pilot pressure is preferably chosen lower than a feed pressure of the compressed air source 5 to the pilot controlled first pressure regulator 2. It is known that in weaving mills the feed pressure is normally chosen between 5 bar and 7 bar, for example 5,5 bar, and that the feed pressure may vary randomly over time. In weaving mills, for example, when a feed pressure of 5,5 bar is chosen, random variations in feed pressure between 5,3 bar and 5,8 bar may occur. In order to avoid that pressure variations in the feed pressure result in a variation of the pilot pressure, the pilot pressure is regulated by the second pressure regulator 3 to a pressure lower than the minimum expected feed pressure of the compressed air source 5, in an embodiment to a pressure between 2,5 bar and 3,5 bar.

In fig. 1, also a third pressure regulator 4 is provided for regulating a feed pressure for the second pressure regulator 3. According to an embodiment, the third pressure regulator 4 is a manually adjustable pressure regulator. The feed pressure for the second pressure regulator 3 is in this case set lower than the feed pressure of the compressed air source 5 and set higher than the desired pilot pressure to the first pressure regulator 2, for example set at about 4 bar. In case a motor controlled pressure regulator is used as second pressure regulator 3, such a reduction is also advantageous as due to this the forces on the second pressure regulator 3 are relatively low, and a smaller motor can be used. In other embodiments the third pressure regulator 4 is omitted, so that the feed pressure of the second pressure regulator 3 corresponds to the feed pressure of the compressed air source 5.

In fig. 1 a control unit 21, more particularly an open-loop control unit 21 is shown which is arranged for controlling or regulating a control variable of the first pressure regulator 2, in this embodiment the pilot pressure for the first pressure regulator 2, by controlling the second pressure regulator 3 in dependence of, for example, the measured feed pressure of the compressed air source 5, a determined airflow through the feed line 7, the desired output pressure p_w and/or an insertion parameter such as an arrival moment of a weft thread at a thread detector 22 which, for example, is arranged along an insertion path of the weft thread. In the context of the invention, with an "open-loop control unit" a control unit is meant for controlling the output pressure of a pressure regulator wherein the output pressure of the pressure regulator is not measured and not used as a feedback for controlling the output pressure, but wherein the output pressure however may be controlled in dependence of other parameters than the output pressure, parameters such as for example the abovementioned feed pressure, the desired output pressure, the abovementioned airflow, the abovementioned arrival moment and/or other suchlike parameters. With "open-loop" is so meant that no feedback of the actual output pressure exists, but that the desired value for the output pressure may be regulated based on other parameters. If the blowing device 10 comprises a main blower, the output pressure is adapted to measured parameters for the inserted weft thread, while if the blowing device 10 comprises a relay nozzle, the output pressure is usually kept constant or changed sporadically. The control unit 21 can cooperate with the apparatus 30, in particular with the airflow measuring device 16 of the apparatus 30. Preferably a feedback control of the pressure regulator device 17 based on the output pressure at the outlet 11 or the pressure in the buffer airtank 8 is avoided, so that no pressure sensor has to be provided downstream of the outlet 11 of the first pressure regulator 2, for example at the buffer airtank 8. Further the apparatus 30 comprises instead of or in addition to the airflow measuring device 16, for example, a calculating unit 23 for calculating an airflow through the first pressure regulator 2. According to another possibility, the calculating unit 23 is part of the control unit 21. The calculating unit 23 can calculate the airflow, for example as a sum of values determined in function of parameters such as the opening times of the valve systems 9 to the blowing devices 10, the pressure fed to the blowing devices 10, the kind of nozzles of the blowing devices 10, the number of blowing devices 10 that are used and other parameters. This calculation can be based on previous measurements or on formulae of airflow dynamics.

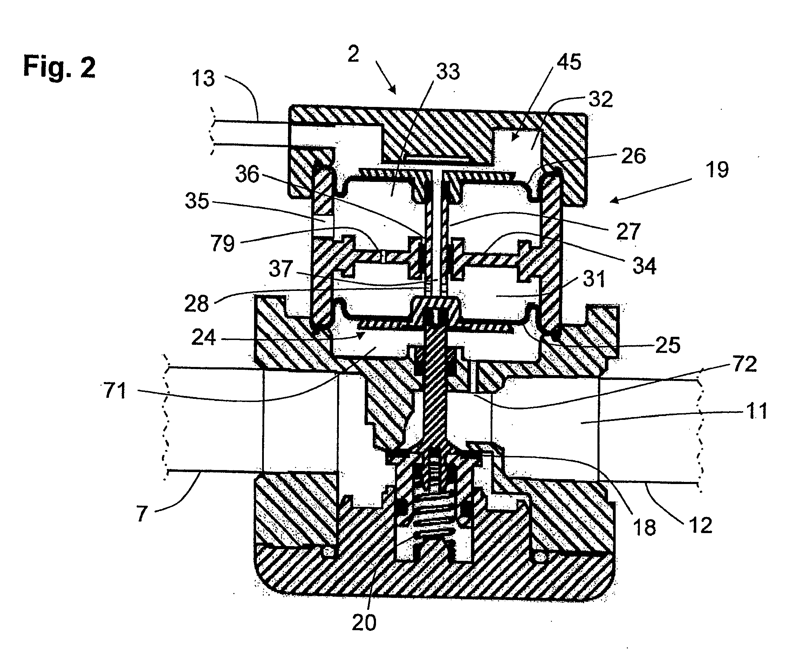

As shown in fig. 2, the actuator 19 of the first pressure regulator 2 is formed by a diaphragm actuator 24 with a first diaphragm 25 loaded at one side by a pilot pressure from the second pressure regulator 3 and at the other side by the output pressure of the first pressure regulator 2. The first pressure regulator 2 further comprises a valve element 18 mounted for reciprocal movement by the actuator 19.

In the embodiment shown in fig. 2 also a second diaphragm 26 loaded by the pilot pressure from the second pressure regulator 3 is provided. The second diaphragm 26 is coupled for force transmission to the first diaphragm 25 by a rod 27, so that the second diaphragm 26 can press on the first diaphragm 25. The load on the second diaphragm 26 is applied to the first diaphragm 25, and the resulting load on the first diaphragm 25 is balanced by the output pressure of the first pressure regulator 2. The output pressure is only in contact with the first diaphragm 25. The effective surface of the first diaphragm 25 on which acts the pilot pressure is somewhat decreased by the rod 27. However this decrease is generally negligible and the effective surface loaded by the pilot pressure is essentially equal to the joint surface of the first and the second diaphragm 25, 26. Therefore the effective surface loaded by the pilot pressure is substantially higher than the effective surface loaded by the output pressure. The output pressure is in this case approximately double of the pilot pressure, for example 1,9 times the pilot pressure. Due to this a compact pilot controlled pressure regulator 2 is obtained.

In this embodiment, a first pressure chamber 31 set under pilot pressure, also referred to as first pressure chamber for pilot pressure, is provided that is delimited by the first diaphragm 25. Further, a second pressure chamber 32 for pilot pressure is provided that is delimited by the second diaphragm 26. The pressure chambers 31 and 32 are stacked and mutually connected by an intermediate chamber 33. The first pressure chamber 31 is further delimited by a cover 34. The intermediate chamber 33 communicates with the environment via an opening 35, so that the environment pressure prevails in the intermediate chamber 33. The intermediate chamber 33 is delimited by the second diaphragm 26 and the cover 34. The outlet 11 communicates with the pressure chamber 71 via an opening 72.

The cover 34 that delimits the first pressure chamber 31 is provided with a through opening 36 through which the rod 27 moves. Between the rod 27 and the opening 36 a sealing, for example a sealing ring, may be provided. The cover 34 comprises a small opening 79 that allows that a small leak air flow can flow from the first pressure chamber 31 via the openings 35 and 79 to the environment. In use, the first pressure chamber 31 is set under pilot pressure, i.e. a pilot pressure is fed to the first pressure chamber 31. The small leak air flow is advantageous to avoid a hysteresis when a change of pilot pressure is required. Thereby, a fast pressure control is ensured. In case no pilot pressure is fed to the first pressure chamber 31, for example in idle times, the pressure in the first pressure chamber 31 will eventually equal the environment pressure.

This leak air flow also flows through the second pressure regulator 3 (see fig. 1), which offers the advantage that the second pressure regulator 3 by this leak air flow is less sensitive to so-called hysteresis. In the context of this invention "hysteresis" means that the pilot pressure to the pilot controlled first pressure regulator 2 remains almost constant in case of a certain change of position of the stepper motor of the second pressure regulator 3, both if this stepper motor moves toward a certain position with a movement in the one direction and with a movement in the opposite direction. Hysteresis may arise because of the friction and the deformations in case of absence of an airflow through the second pressure regulator 3. Because of the leak air flow the pilot pressure can decrease when desired.

The rod 27 also comprises an axial air duct 37 that allows that compressed air flows between the first pressure chamber 31 and the second pressure chamber 32. The air duct 37 ends with openings 28. The leak air flow also flows through the duct 13, the pressure chamber 32, the axial air duct 37 with opening 28 and the pressure chamber 31. The air duct 37 offers the advantage that the pilot pressure can be supplied as well to the first pressure chamber 31 as to the second pressure chamber 32 via only one duct 13. If no seal is provided between the rod 27 and the opening 36 the function of the opening 79 may be replaced by providing a limited play defined beforehand between the rod 27 and the opening 36.

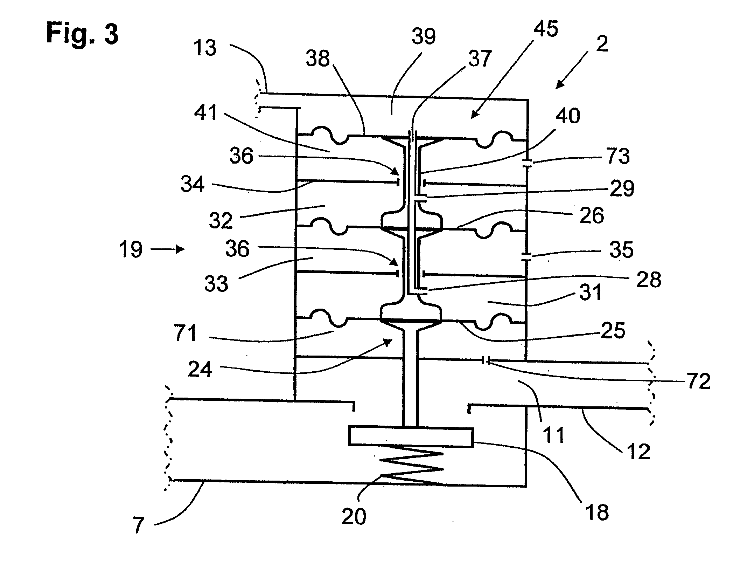

Fig. 3 shows a first pressure regulator 2 with a diaphragm actuator 24 alike to fig. 2. The diaphragm actuator 24 of the first pressure regulator 2 shown in fig. 3 comprises next to the first diaphragm 25 and a first second diaphragm 26 as shown in fig. 2, also an additional or second second diaphragm 38 loaded by the pilot pressure that is provided in a stacked arrangement. The additional or second second diaphragm 38 is arranged in a corresponding third pressure chamber 39 and the load applied to the additional or second second diaphragm 38 is transmitted to the first second diaphragm 26 via a rod 40 in a way similar as the rod 27 shown in fig. 2 can provide in a force transmission between the second diaphragm 26 and the first diaphragm 25 in fig. 2. Also an intermediate chamber 41 is provided between the pressure chambers 32 and 39. The intermediate chamber 41 is alike to the intermediate chamber 33 and may also be provided with an opening 73 to the environment alike to the opening 35. The fluid at pilot pressure is fed to the third pressure chamber 39 via the duct 13. The rod 40 comprises an axial air duct 37 with a first aperture 28 ending in the second pressure chamber 31 and with a second opening 29 ending in the second pressure chamber 32. According to still another variant, more than three diaphragms with a corresponding pressure chamber for pilot pressure may be provided in a stacked arrangement, with for example corresponding intermediate chambers between adjacent pressure chambers for pilot pressure and corresponding rods.

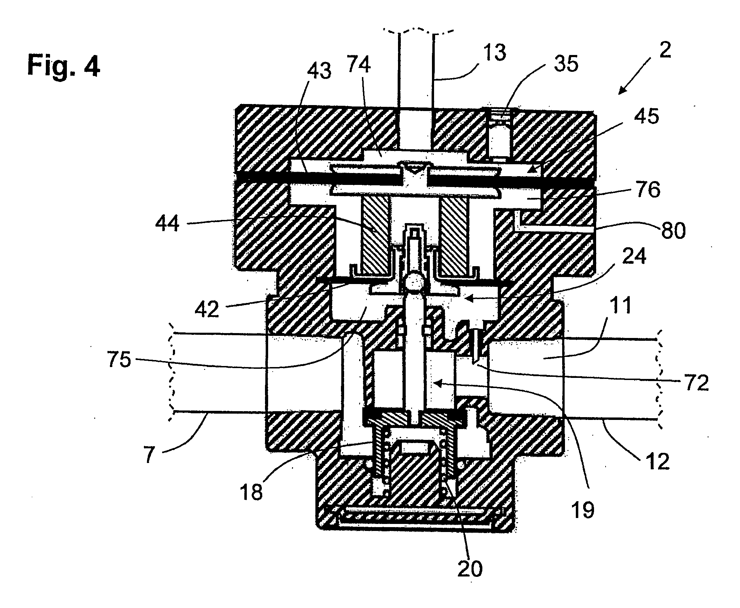

As shown in fig. 4, another variant embodiment of a first pressure regulator 2 with a diaphragm actuator 24 is shown that comprises a first diaphragm 43 loaded by the pilot pressure via the duct 13 and a third diaphragm 42 loaded by the output pressure via the opening 72, wherein the effective surface of a third diaphragm 42 is substantially smaller than the effective surface of the first diaphragm 43. The pilot pressure is present in the pressure chamber 74 delimited by the first diaphragm 43, while the output pressure is present in the pressure chamber 75. The third diaphragm 42 and the first diaphragm 43 are in this embodiment coupled by a rod 44, for example a ring shaped rod 44, and move conjointly, wherein the load of the pilot pressure acting on the first diaphragm 43 is balanced by the load of the output pressure acting on the third diaphragm 42. Hence, the output pressure for balancing the pilot pressure is substantially higher than the pilot pressure. An opening 35 for a leak airflow is provided in the pressure chamber 74 under pilot pressure. By providing an opening 80 the intermediate chamber 76 between the first and the third diaphragm 42, 43 can be kept at environment pressure.

A diaphragm actuator 24 as shown in figs. 2 to 4 forms in any case a force enlarging device 45, so that a load exerted by the pilot pressure on the diaphragm actuator 24 is enlarged or amplified. The force enlarging device 45 forms in this case an integral component of the compact diaphragm actuator 24. By applying a force enlarging device 45 a load by the pilot pressure exerted on the diaphragm actuator 24 is enlarged, so that a desired output pressure can be set by a pilot pressure that is chosen lower than the output pressure or chosen lower than the minimally expected value of the feed pressure of the compressed air source 5 (shown in fig. 1).

The load by the pilot pressure is in this case balanced by the load by the output pressure and the force element 20. The force enlarging device 45 allows a relative high output pressure with a pilot pressure which is relatively low and is independent from the feed pressure coming from a compressed air source 5. A force enlarging device 45 allows to set an output pressure which is as high as the feed pressure, so that the feed pressure can be used fully for inserting weft threads.

In the embodiment of figs. 1 to 3 the diaphragms 25, 26, 38 are formed by a dividing element that forms a moveable dividing wall for compressed air between two chambers. The diaphragms 25, 26, 38 comprise in this embodiment a bellows-like element of which the edges are clamped. In the embodiment of fig. 4, the diaphragms 42, 43 are formed by a plate-like element, preferable a relatively elastic plate-like element, such as a membrane. The diaphragms 42, 43 form a moveable dividing wall between two chambers and their edges are clamped.

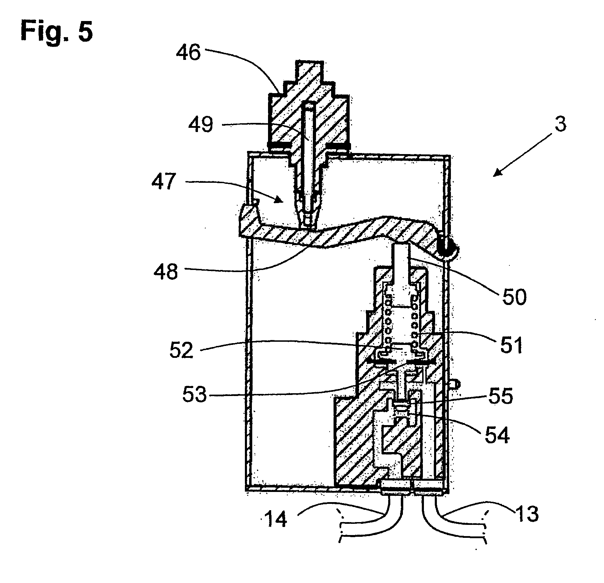

Fig. 5 shows an embodiment of a second pressure regulator 3. The second pressure regulator 3 shown in fig. 5 for regulating the pilot pressure is a motor controlled pressure regulator. The second pressure regulator 3 comprises a motor 46, for example a stepper motor, and a transmission mechanism 47 with a lever 48 for a transmission of a movement of a motor shaft 49 of the motor 46 to a setting element 50 of the second pressure regulator 3. In an embodiment the motor shaft 49 does not perform a turning movement but a linear axial movement when driving the motor 46. The force applied by the lever 48 on the setting element 50 defines the preload of the spring 51 which acts on the diaphragm actuator 52. The diaphragm 53 of the second pressure regulator 3 is loaded on one hand by the spring 51 and on the other hand by the pilot pressure supplied to the first pressure regulator 2 via the duct 13 and a force element 54 to move the valve element 55 of the second pressure regulator 3. Such a pressure regulator 3 is known from US 4,627,459.

Compressed air is supplied to the second pressure regulator via duct 14. To the second pressure regulator 3 compressed air may be supplied at a lower pressure than the feed pressure, for example from the third pressure regulator 4. If this lower pressure is chosen low enough below the feed pressure, for example at 4 bar in case of a feed pressure of 5,5 bar, the second pressure regulator 3 is not submitted to undesired variations in the feed pressure, so that a precise regulating of the pilot controlled first pressure regulator 2 becomes possible easily.

According to an embodiment, at a calibration of the air supply system 1, for example during an assembly of the air supply system 1, factors which influence the pilot pressure undesirably are eliminated, such as dimension tolerances of amongst others the lever 48, the spring 51, the setting element 50 or the force element 54 of the second pressure regulator 3. The simplifies the providing of an open loop control unit 21 for the output pressure of the first pressure regulator 2 without a feedback control for the output pressure of the first pressure regulator 2.

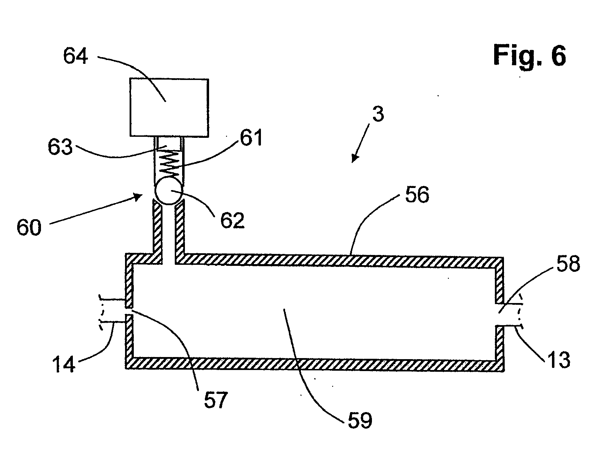

In fig. 6 an embodiment of the second pressure regulator 3 is shown having a housing 56 with an inlet 57 allowing to throttle compressed air, an outlet 58 to a duct 13 to the first pressure regulator 2 shown in figs. 1 to 4 and an air volume 59 there between, wherein a loaded pressure relief valve 60 is provided on the housing 56, which pressure relief valve 60 is loaded by a settable force. According to this embodiment, air is fed to the air volume 59 of the housing 56 via the inlet 57. As the inlet 57 is small, there is a pressure decrease due to a throttling effect. If the pressure in the air volume 59 reaches a preset value, then the pressure relief valve 60, for example a ball valve with a spring element 61 and a ball 62, opens and air can escape until the pressure is decreased to the preset value and the pressure relief valve 60 closes again. Preferably, the spring element 61 of the pressure relief valve 60 is loaded using a plunger 63, which is controlled manually and/or by a motor 64. The motor 64 can be controlled by the control unit 21 shown in fig. 1. The motor 64 of the second pressure regulator 3 is operable to provide a set pressure to be subsequently used as pilot pressure accurately. The inlet 57 is connected to the duct 14, as shown in fig. 1. Due to the throttling at the small inlet 57 in this embodiment a third pressure regulator 4 is not necessarily needed, as for example is shown in fig. 1 and the inlet 57 may be connected directly with the feed line 7 as shown in fig 1. According to a variant not shown the pressure relief valve comprises a closing element that is driven by a motor formed as an actuator, for example a linear actuator, such as a magnetic or solenoid actuator.

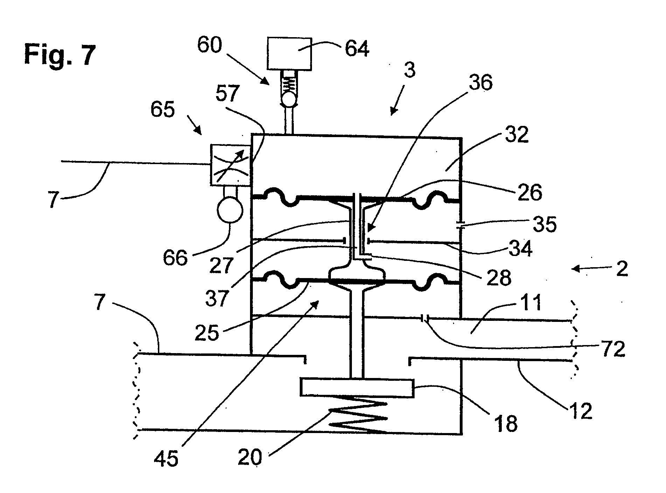

According to a variant shown in fig. 7, the second pressure regulator 3 is provided integrally with a second pressure chamber 32 of the pilot controlled first pressure regulator 2. In this case, the second pressure regulator 3 is integrated in a top of a second pressure chamber 32 of the pilot controlled first pressure regulator 2, in other words arranged directly above the second diaphragm 26 of the pilot controlled first pressure regulator 2. In this embodiment, a throttling valve 65 is provided at the inlet 57 of the second pressure regulator 3, which is directly connected to the feed line 7. According to a variant not shown, the inlet 57 may as well be connected to the duct 14 as shown in fig. 1. The throttling valve 65 allows to set suitably the throttling at the inlet 57. The throttling gap of the throttle valve 65 is set by a motor 66, in particular a stepper motor or any other actuator such as an electromagnetic actuator, so that a sufficient airflow flows through the throttling valve 65 in order to allow to increase or decrease the pilot pressure. In this embodiment the pilot pressure in the pressure chamber 32 at the outlet 58 is set by controlling the motor 64 of the pressure relief valve 60 in a way as described for fig. 6. The second pressure chamber 32 has the same function as the air volume 59 as described in fig. 6.

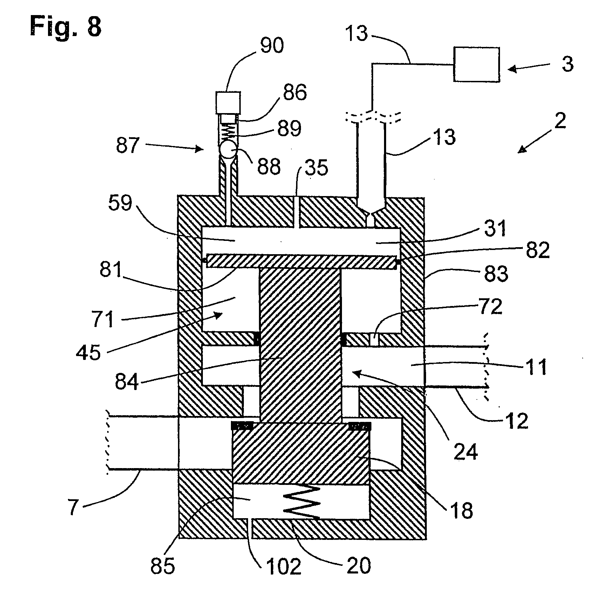

In fig. 8 another variant embodiment of a first pressure regulator 2 is shown having a diaphragm actuator 24 comprising a diaphragm 81 that is loaded by the output pressure via the opening 72 and by the pilot pressure via the duct 13. The diaphragm 81 is a dividing element with a moveable dividing wall for compressed air between a first pressure chamber 31 under pilot pressure and pressure chamber 71 under output pressure. The diaphragm 81 is in this case a disc or plate-like element that is provided at its edges with a sealing 82 and that may be moved up and down in the housing 83. The diaphragm 81 is connected to the valve element 18 via a rod 84, wherein the valve element 18 is moveable in a cavity 85 which is connected with the environment via an opening 102. The first pressure chamber 31 is fed via a duct 13 with a pilot pressure from a second pressure regulator 3, so that the pilot pressure prevails in the first pressure chamber 31. The pressure chamber 31 comprises an opening 35 to allow a leak air flow through the pressure chamber 31. The first pressure chamber 31 is also provided with a manually settable pressure relief valve 87. This pressure relief valve 87 comprises a plunger 86, a closing element 88, a spring element 89 and a setting button 90. The pressure relief valve 87 is for example set to a maximal pressure allowed in the pressure chamber 31, for example to a pressure of 3,8 bar if in normal conditions the pilot pressure is allowed to vary between 2,5 bar and 3,5 bar. This offers the advantage that when the pilot pressure would force the valve element 18 into fully open condition, the pressure prevailing in the pressure chamber 31 never can become higher than the set maximal value, even if the pilot pressure from the second pressure regulator 3 would be higher. As the effective surface of the diaphragm 81 under pilot pressure is larger than the effective surface of the diaphragm 81 under output pressure, the diaphragm acts as a force enlarging device 45..

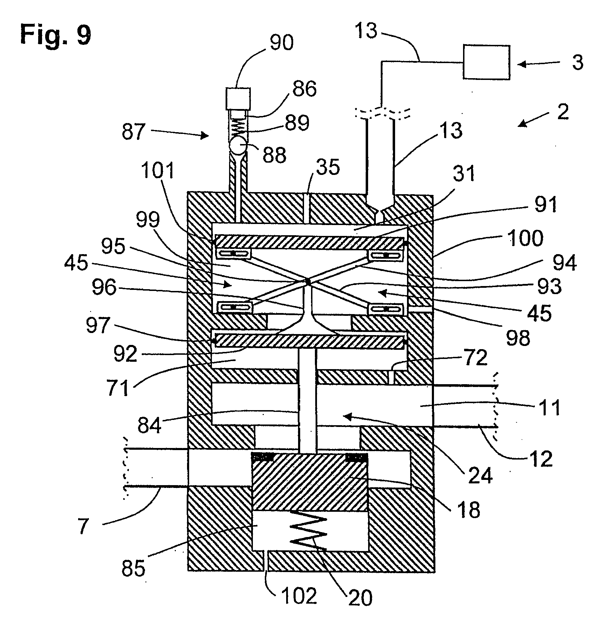

In fig. 9 a variant is given of the pilot controlled pressure regulator 2 as shown in fig. 8 wherein the force enlarging device 45 comprises a couple of levers 93, 94, a hinge element 95 and a connecting part 96. The diaphragm 91 forms a dividing element for compressed air between the pressure chambers 31 and 99 and is in this case, comparable to the diaphragm 81 from fig. 8, moveable up and down in the housing 100. The diaphragm 91 is provided with a sealing 101 at its edges and is loaded by the pilot pressure via the duct 13 and by the environment pressure via the opening 98. The levers 93 and 94 are hinged connected to each other by the hinge element 95 and are slidably hinged connected to the diaphragm 91 and to the housing 100. The connecting part 96 is connected to the hinge element 95 and to the diaphragm 92 so that by an up and down movement of the diaphragm 91 the connecting part 96 is moved up and down and provides in a transmission of the load by the pilot pressure on the diaphragm 91 to the diaphragm 92. The diaphragm 92 is provided with a sealing 97 at its edges and is loaded by the output pressure via the opening 72 and by the environment pressure via the opening 98.

The load by the output pressure on the diaphragm 92 is balanced by the load by the pilot pressure on the diaphragm 91 enlarged by the force enlarging device 45. The rod 84 is connected to the diaphragm 92 for moving the valve element 18. In this way a force enlarging device 45 is conceived wherein the diaphragm 91 is always making a larger movement than the diaphragm 92, so that with a pilot pressure lower than the output pressure the valve element 18 always may be brought in fully opened position.

Embodiments of methods for supplying compressed air to a blowing device 10 of an airjet weaving machine with an air supply system 1 comprising a pilot controlled first pressure regulator 2 as shown in fig. 1 will be explained hereafter in detail.

In case the airflow through the first pressure regulator 2 and/or the output pressure at the outlet 11 of the first pressure regulator 2 changes, the valve element 18 of the first pressure regulator 2 is moved until the output pressure at the outlet 11 of the first pressure regulator 2 reaches again a desired value.

In this case the pilot pressure is also adjusted in function of the weaving conditions. In this case, an adjustment to the weaving conditions is carried out using the second pressure regulator 3 that determines the pilot pressure.

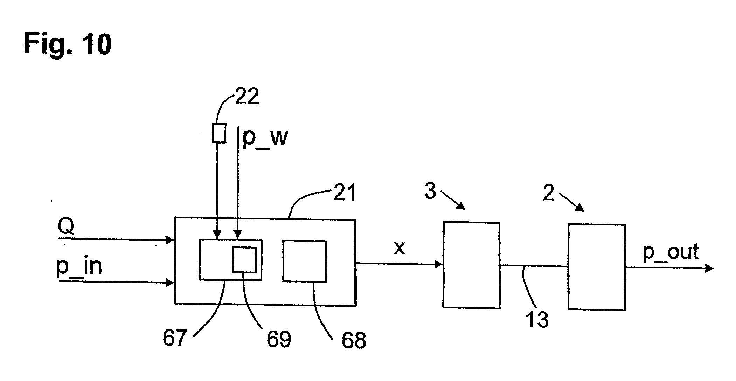

Fig. 10 shows a schematic view of a control for the air supply system 1 of figure 1 using an open-loop control unit 21 according to the invention. The control unit 21 comprises a setting device 67 for setting a desired output pressure in dependence of the weaving conditions, such as weft thread properties, the weaving speed, the weaving pattern, measurement values for a weft thread insertion, such as an average value for an arrival moment of a weft thread at a thread detector 22 and other parameters. In order to obtain that an arrival moment of a weft thread lies within predefined limits, it is advantageous to regulate the output pressure at the first pressure regulator 2. As long as an arrival moment is within the predefined limits, an exact knowledge of the output pressure at the first pressure regulator 2 or of the feed pressure of the compressed air source 5 is irrelevant for regulating the open-loop controlled output pressure. The setting device 67 can according to a variant be an external setting device which is connected by wire or wirelessly for data communication with the control unit 21, in particular with the open-loop control unit 21. In this case weaving conditions are determined and a desired output pressure is matched to the weaving conditions.

If weft threads arrive too late at a thread detector 22 the control unit 21 controls a control parameter for the pilot pressure for the pilot controlled first pressure regulator 2 so that this pilot pressure increases and in this way the output pressure of the pilot controlled first pressure regulator 2 increases, while if weft threads arrive too early at a thread detector 22 the control unit 21 controls a control parameter for the pilot pressure for the pilot controlled first pressure regulator 2 so that this pilot pressure decreases and in this way the output pressure decreases. According to another possibility, for example, in case a bobbin change is detected, the pilot pressure for the pilot controlled first pressure regulator 2 can be increased temporarily in order to avoid the influence of an expected slow weft thread coming from the beginning of the bobbin.

In order to be able to apply an open-loop control, prior to the start of the weaving machine, thus prior to the weaving a calibration of the air supply system 1 is carried out. At calibrating a number of values are determined for an output pressure in dependence of a number of feed pressures, a number of airflows and/or a number of control variables to the first pressure regulator 2. These values are stored as calibration data. The calibration data is used for determining a control variable to the first pressure regulator 2 in dependence of the measured feed pressure and/or a determined airflow, so that a desired output pressure is achieved.

This means that, at the calibrating, data is collected for an output pressure in dependence of a number of control variables, also named control parameters or input parameters, to the first pressure regulator 2, for a number of airflows through the first pressure regulator 2 and/or for a number of feed pressures to the first pressure regulator 2. These measurements are referred to as calibration and the collected data is referred to as calibration data. Using the calibration data it is in return possible to determine a control variable for a measured feed pressure, a determined airflow, and a desired output pressure.

To collect such calibration data for a certain type of first pressure regulator 2 together with a certain type of second pressure regulator 3 in a lab for example following measurements are done. For different positions of for example the stepper motor of the second pressure regulator 3, different flows of air through the first pressure regulator 2 and different feed pressures of the compressed air source 5, the output pressure at the first pressure regulator 2 is determined. This may be done each time for a number of first pressure regulators 2 of a certain construction and a number of second pressure regulators 3 of a certain construction.

The open-loop control unit 21 comprises a storage element 68 in which the collected calibration data is stored. Also a mathematical model for those calibration data may be stored and used by an operator unit 69, which for example defines average values for each type of pressure regulator. When using an individual first pressure regulator 2 and an individual second pressure regulator 3, in a certain weaving machine a number of the abovementioned measurements may be repeated to bring the influence of individual tolerances, such as for example dimension tolerances, into account. For example additional measurements by at least two output pressures, one flow and one feed pressure are carried out to apply individual corrections based on the mathematical model via the operator unit 69 to for example the average values of the mathematical model for the actually used first pressure regulator 2 and the actually used second pressure regulator 3. Those additional measurements may be done at the manufacturer, at the assembly of the weaving machine, or at a weaving machine in the weaving mill.

The open-loop control unit 21 is arranged for regulating a control variable x of the first pressure regulator 2, for example in dependence of a measured feed pressure p_in, a determined airflow Q, a desired output pressure p_w and/or signals of a thread detector 22 and the calibration data stored in the storage element 68. The calibration data allows an efficient open-loop control for controlling an output pressure p_out in case no unexpected disturbances occur, such as defects in a feed line 7 upstream of the first pressure regulator 2 or in the duct 12 downstream of the first pressure regulator 2. The storage element 68 may be an integral part of the open-loop control unit 21. In other embodiments, an external storage element is provided which is connected with the open-loop control unit 21 by wire or wirelessly for data communication. The actual output pressure p_out is in this case not supplied to the control unit 21.

The control unit 21 preferably cooperates with a pressure sensor 15 for measuring the feed pressure p_in in the feed line 7 upstream of the first pressure regulator 2. For example, the control unit 21 also cooperates with an apparatus 30 for determining and/or calculating an airflow Q through the first pressure regulator 2. The control unit 21 can adjust the output pressure p_out of the first pressure regulator 2 when the feed pressure p_in changes or when the feed pressure p_in drops below a boundary value for this feed pressure p_in that is for example related to a desired output pressure p_w of the first pressure regulator 2. The output pressure p_out mainly corresponds to the pressure in the buffer airtank 8. In this way the first pressure regulator 2 also allows to compensate random variations in the feed pressure of the compressed air source 5.

The control unit 21 uses calibration data to determine a control variable x for adjusting the first pressure regulator 2 in dependence of the measured feed pressure p_in in the feed line 7, the determined airflow Q through the feed line 7, the desired output pressure p_w and the calibration data, so that at an outlet 11 of the first pressure regulator 2 an actual output pressure p_out is achieved equal to a desired output pressure p_w. A control variable for the motor controlled second pressure regulator 3 is adjusted in dependence of amongst others the above parameters. By considering the airflow Q through the first pressure regulator 2 with an apparatus 30 for determining an airflow, every unwanted decrease of an output pressure p_out due to an increased airflow Q can easily be avoided.

The open-loop control unit 21 is arranged for determining of a control variable x for adjusting the first pressure regulator 2 in dependence of the measured feed pressure p_in, the airflow Q through the pressure regulator 2 and the desired output pressure p_w. In the embodiment shown, the control variable x is a control command to a motor 46, 64, 66 of the second pressure regulator 3. The control of the motor 46, 64, 66 allows to set the position of the motor 46, 64, 66 and also to set the pilot pressure to the first pressure regulator 2. In the embodiment shown the pilot pressure is mainly influenced by suitably controlling the motor 46 or 64, more particularly by controlling the motor to a defined position.

The setting device 67 for example also comprises a relational operator unit 69 for comparing a measured feed pressure p_in with the set desired output pressure p_w and for detecting a decrease of the feed pressure p_in below a minimal value for the set desired output pressure p_w. The setting device 67 is arranged to adapt a method for controlling the desired output pressure p_w of the air supply system 1 if a decrease of the feed pressure p_in below a minimal value for the desired output pressure p_w is detected, so that the pilot pressure for the desired output pressure p_w at the first pressure regulator 2 is no longer adapted or is adapted only between limits. This increases a stability of the air supply system 1. The minimal value for the desired output pressure p_w may be defined as the minimal value of the measured feed pressure p_in during weaving under normal conditions and may be stored.

The air supply system 1 according to the invention with a pressure sensor 15 is particularly suitable to be applied in case the feed pressure of the compressed air source 5 drops below a set value that is function of the desired output pressure at the first pressure regulator 2. Hereby a control variable to the pressure regulator 2 can be adjusted in dependence of the measured feed pressure of the compressed air source 5. If the feed pressure decreases below a certain value, this may be displayed or signalled by a displaying unit of the weaving machine.

A drop of the feed pressure can result in that an inserted weft thread arrives later at a thread detector 22. If the late arrival is due to a too low feed pressure, an increase of the desired output pressure at the pressure regulator 2 to compensate the late arrival is in most cases not possible. In these circumstances a late arrival of the weft thread could be compensated by an increase of the pilot pressure at the first pressure regulator 2. As the low output pressure is due to a too low feed pressure, such an adaptation of the pilot pressure does not result in an increase of the output pressure, as the pilot controlled pressure regulator 2 in this case is already fully open. In this case the feed pressure in the feed line is fully used as the valve element 18 is in full open position. If such an increase of the pilot pressure would be carried out, in case the feed pressure would increase again, the output pressure at the pressure regulator 2 would become undesirable high, which also could lead to weaving errors. Due to this in case of a too low feed pressure, more particularly if the measured feed pressure is dropped below a set feed pressure, the pilot pressure for a desired output pressure is not adapted any more or is only adapted within limits. This means that the pilot pressure for the pilot controlled first pressure regulator 2 is not adapted any more or is only adapted within limits. The motor controlled second pressure regulator 3 is provided for adjusting the pilot pressure for the first pressure regulator 2. A control variable for the motor controlled second pressure regulator 3 is in this case adjusted at least in dependence of the measured feed pressure. In this case it is obtained that when the feed pressure increases subsequently again, the output pressure at the first pressure regulator 2 still approximately corresponds to the weaving conditions.

In a method the first pressure regulator 2 is set to a maximum opening for allowing a maximum flow in order to allow a maximum airflow. This allows to weave as fast as possible. This is also used in case the feed pressure in the feed line 7 is lower than a pre-set minimal value. In this case the pilot pressure is set sufficiently high in order to achieve that the valve element 18 is fully opened independently of the output pressure of the first pressure regulator 2 and independently of the force of the force element 20. This is possible because a force enlarging device 45 for the pilot pressure is present, in other words because this pilot pressure can always increase sufficiently in order to be able to fully open the valve element 18 at any output pressure of the first pressure regulator 2.

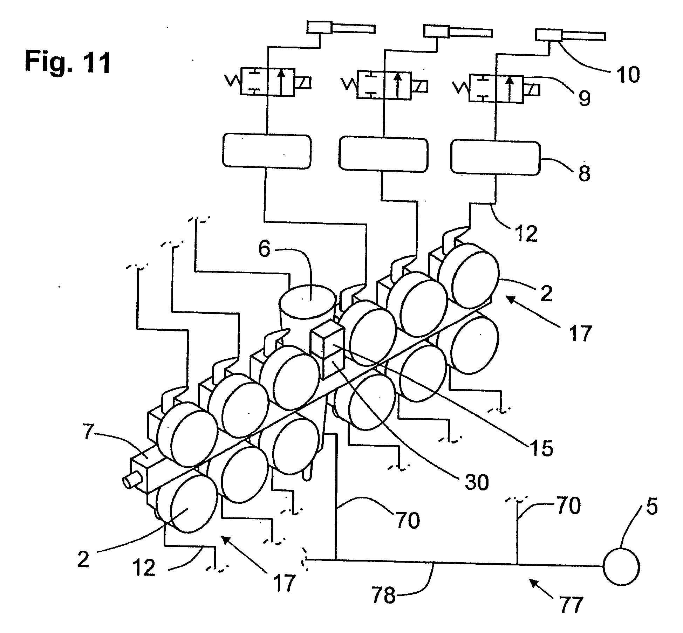

As shown in fig. 11 a group of pressure regulator devices 17 is provided, each of which comprise at least a pilot controlled first pressure regulator 2 to which compressed air is fed at feed pressure via a common feed line 7. The first pressure regulators 2 are arranged adjacent or next to each other and may be at least partially formed as integral components. An arrangement of the pilot controlled pressure regulators 2 of the pressure regulator devices 17 next to one another allows an arrangement that is small in size. Further, the length of feed lines 7 and losses in the feed lines 7 may be reduced due to the small sized pilot controlled first pressure regulators 2. An air filter 6 may be arranged close to the pressure regulator devices 17.

In this embodiment also several buffer airtanks 8 with associated blowing devices 10 are supplied with compressed air from a common compressed air source 5 via respective first pressure regulators 2. In this case one common pressure sensor 15 for measuring the feed pressure upstream of all first pressure regulators 2 is sufficient, instead of several pressure sensors each associated to each buffer airtank 8. Consequently, in preferred embodiments, no pressure sensors are provided at the buffer airtanks 8.

The open-loop control unit 21 as described above allows for example that an operator of weaving machines is able to compare the weaving pressures, this means the pressures at which a weft thread is inserted, of different blowing devices 10 and of different weaving machines easily without using pressure sensors in the various buffer airtanks 8. The different pressures in the pressure regulator devices 17 and/or the pressures in each buffer airtank 8 may be determined by the control unit 21 (shown in fig. 1) using calibration data and may be displayed on a display unit of the weaving machine. Herein the displayed output pressures are equal to the output pressures controlled or desired by the open-loop control unit 21 and approximately equal to the actual output pressures at the pressure regulator 2.

If several weaving machines are coupled to a central control unit that can cooperate with the control unit 21 of each weaving machine, by means of different pressure measurements with a pressure sensor 15 at a feed line 7 of each weaving machine, pressure differences in several supply ducts 70 to a respective weaving machine, which are fed with compressed air from a compressed air source 5 via a distribution system 77 to a respective feed line 7 of a weaving machine can be determined. The feed line 70 is herein connected to the inlet of the air filter 6 arranged upstream of the feed line 7. This allows to determine when the supply pressure in a supply duct 70 to a certain feed line 7 of a weaving machine is different, in particular is substantially lower than to another weaving machine, so that malfunctions in one of the supply ducts 70 or in one of the ducts 78 of the distribution system 77 for compressed air from a compressed air source 5 to one of the several weaving machines can be determined. Since a decrease of the feed pressure also may be caused by an air filter 6 that is dirty, this method is also suitable to define when an air filter 6 is dirty.

According to a variant not shown, the second pressure regulator 3 is as the first pressure regulator 2 executed as a pilot controlled pressure regulator, whereby the pilot controlled second pressure regulator 3 can be smaller in dimension than the pilot controlled first pressure regulator 2.

The apparatus 30 for determining an airflow through the pressure regulator 2 is not limited to the shown airflow measuring device 16 and/or calculating unit 23, but can also be formed by any other device that is capable to determine the amount of air through the pressure regulator 2.

A pilot controlled pressure regulator 2 with a diaphragm actuator 24 can act very fast because the moving parts can be designed lightweight. As the output pressure acts in opposite direction to the pilot pressure on a diaphragm actuator 24 the valve element 18 is moved in response to a load difference between the load by the pilot pressure and the load by the output pressure. By moving of the valve element 18 the valve opening is increasing or decreased. Due to this the regulation is influenced by the load difference and the regulation is almost not influenced by the absolute value of the set pilot pressure. This is advantageous for weaving with a desired speed and weft insertion pattern. A diaphragm actuator 24 with a force enlarging device 45 allows to form a pressure regulator 2 small in size, so that several pressure regulators 2 can be arranged adjacent to each other in a small place.

In the context of the invention, with the term "motor controlled pressure regulator" a pressure regulator is meant which is controlled by a motor, for example by a rotating stepper motor, a linear stepper motor, a controllable DC motor, a servo motor, an electromagnet with a magnet core and/or permanent magnet, an actuator such as a linear actuator, a rotating actuator, a voice coil actuator or a moving spool actuator, or any other motor which is electrically controllable.

The pressure regulators, the pressure regulator devices, the air supply systems and the methods according to the invention are not limited to the embodiments shown and described as example, but may also comprise variants and combinations of these embodiments that fall under the claims.

## Claims

1. An air supply system for an airjet weaving machine, which air supply system (1) comprises a pilot controlled first pressure regulator (2), **characterized in that** the air supply system (1) comprises a control unit (21) which is arranged for controlling a control variable for the pilot controlled first pressure regulator (2) in dependence of calibration data.

2. The air supply system according to claim 1, **characterised in that** the air supply system (1) further comprises at least one pressure sensor (15) for measuring a feed pressure to the pilot controlled first pressure regulator (2), wherein the open-loop control unit (21) is arranged for adapting the control variable for the pilot controlled first pressure regulator (2) in dependence of the measured feed pressure.

3. The air supply system according to claim 1 or 2, **characterized in that** the air supply system (1) further comprises an apparatus (30) for determining an airflow through the pilot controlled first pressure regulator (2), wherein the open-loop control unit (21) is arranged for adjusting the control variable for the pilot controlled pressure regulator (2) in dependence of the determined airflow.

4. The air supply system according to one of claims 1 to 3, **characterized in that** the open-loop control unit (21) comprises a storage element (68) in which calibration data is stored and arranged for adapting the control variable of the pressure regulator (2) in dependence of the measured feed pressure and/or a determined airflow and/or the calibration data, so that a desired output pressure is achieved.

5. The air supply system according to one of claims 1 to 4, **characterized in that** a setting device (67) is provided for setting a desired output pressure in dependence of weaving conditions, in particular in dependence of an actual arrival moment of an inserted weft thread.

6. The air supply system according to claim 5, **characterized in that** the setting device (67) comprises a relational operator unit (68) for comparing a measured feed pressure to the set desired output pressure and for detecting a drop of the feed pressure below the set desired output pressure, wherein the setting device (67) is arranged to not change any more or only change within limits the set desired output pressure, if a drop of the feed pressure below the set desired output pressure is detected.

7. The air supply system according to any of claims 1 to 6, **characterized in that** the first pressure regulator (2) is a pilot controlled pressure regulator with a pilot pressure settable by a control variable.

8. The air supply system according to claim 7, **characterized in that** a motor controlled second pressure regulator (3) is provided for regulating the settable pilot pressure of the pilot controlled first pressure regulator (2).

9. The air supply system according to claim 7 or 8, **characterized in that** the pilot controlled first pressure regulator (2) comprises a force enlarging device (45) for enlarging a load applied by the pilot pressure.

10. A method for supplying air to an airjet weaving machine with an air supply system (1), the air supply system (1) comprising a pilot controlled first pressure regulator (2), **characterized in that** a control variable for the pilot controlled first pressure regulator (2) is controlled by an open-loop control unit (21) in dependence of calibration data.

11. The method according to claim 10, wherein further a feed pressure to the first pressure regulator (2) is measured and the control variable to the first pressure regulator (2) is regulated in dependence of the measured feed pressure.

12. The method according to claim 10 or 11, **characterized in that** further an airflow through the first pressure regulator (2) is determined and the control variable for the first pressure regulator (2) is adjusted in dependence of the determined airflow.

13. The method according to one of claims 10 to 12, **characterized in that** the air supply system (1) is calibrated for determining values for an output pressure in dependence of varied feed pressures, varied airflows and/or varied control variables for the pressure regulator (2), wherein calibration data is stored and the calibration data is used for determining the control variable to the pressure regulator (2) in dependence of the measured feed pressure and/or a determined airflow and/or the calibration data, so that a desired output pressure is achieved.

14. The method according to one of claims 10 to 13, **characterized in that** weaving conditions are determined and the desired output pressure is matched to the weaving conditions.

15. The method according to claim 14, **characterized in that** a measured feed pressure is compared to the desired output pressure for determining a drop of the feed pressure below the set desired output pressure, wherein the set desired output pressure is not varied or varied within limits if a drop of the feed pressure below the set desired output pressure is detected.

16. The method according to any of claims 10 to 15, **characterized in that** the pressure regulator (2) is a pilot controlled pressure regulator with an actuator (19) loaded by a pilot pressure, wherein the pilot pressure is adjusted at least in dependence of the measured feed pressure.

17. The method according to claim 16, **characterized in that** a motor controlled pressure regulator (3) is provided for adjusting the pilot pressure for the pressure regulator (2) and that the motor controlled pressure regulator (3) is adjusted at least in dependence of the measured feed pressure.

## Patentansprüche

1. Ein Luftzufuhrsystem für eine Luftwebmaschine, welches Luftzufuhrsystem (1) einen ersten pilotgesteuerten Druckregler (2) umfasst, **dadurch gekennzeichnet, dass** das Luftzufuhrsystem (1) eine Steuereinheit (21) umfasst, die angeordnet ist zum Steuern einer Steuergrösse für den ersten pilotgesteuerten Druckregler (2) in Abhängigkeit von Kalibrierdaten.

2. Das Luftzufuhrsystem nach Anspruch 1, **dadurch gekennzeichnet, dass** das Luftzufuhrsystem (1) weiter mindestens einen Drucksensor (15) zum Messen eines Förderdrucks an dem ersten pilotgesteuerten Druckregler (2) umfasst, wobei die offene Regelkreissteuereinheit (21) zum Anpassen der Steuergrösse für den ersten pilotgesteuerten Druckregler (2) in Abhängigkeit von dem gemessenen Förderdruck angeordnet ist.

3. Das Luftzufuhrsystem nach Anspruch 1 oder 2, **dadurch gekennzeichnet, dass** das Luftzufuhrsystem (1) weiter einen Apparat (30) zum Bestimmen eines Luftstroms durch den ersten pilotgesteuerten Druckregler (2) umfasst, wobei die offene Regelkreissteuereinheit (21) zum Adjustieren der Steuergrösse für den pilotgesteuerten Druckregler (2) in Abhängigkeit von dem bestimmten Luftstrom angeordnet ist.

4. Das Luftzufuhrsystem nach einem der Ansprüche 1 bis 3, **dadurch gekennzeichnet, dass** die offene Regelkreissteuereinheit (21) ein Speicherelement (68) umfasst, worin Kalibrierdaten gespeichert werden, und angeordnet ist zum Anpassen der Steuergrösse des Druckreglers (2) in Abhängigkeit von dem gemessenen Förderdruck und/oder einem bestimmten Luftstrom und/oder den Kalibrierdaten, so dass ein gewünschter Ausgangsdruck erreicht wird.

5. Das Luftzufuhrsystem nach einem der Ansprüche 1 bis 4, **dadurch gekennzeichnet, dass** eine Einstellvorrichtung (67) zum Einstellen eines gewünschten Ausgangsdrucks in Abhängigkeit von Webbedingungen, insbesondere in Abhängigkeit von einem aktuellen Ankunftmoment eines eingetragenen Schussfadens, vorgesehen ist.

6. Das Luftzufuhrsystem nach Anspruch 5, **dadurch gekennzeichnet, dass** die Einstellvorrichtung (67) eine relationalen Bedienungseinheit (68) umfasst zum Vergleichen eines gemessenen Förderdrucks mit dem eingestellten gewünschten Ausgangsdruck und zum Detektieren eines Abfalls des Förderdrucks unter den eingestellten gewünschten Ausgangsdruck, wobei die Einstellvorrichtung (67) dazu angeordnet ist, den eingestellten gewünschten Ausgangsdruck nicht mehr zu ändern oder nur begrenzt zu ändern, wenn ein Abfall des Förderdrucks unter den eingestellten gewünschten Ausgangsdruck detektiert wird.

7. Das Luftzufuhrsystem nach einem der Ansprüche 1 bis 6, **dadurch gekennzeichnet, dass** der erste Druckregler (2) ein pilotgesteuerter Druckregler mit einem durch eine Steuergrösse einstellbaren Steuerdruck ist.

8. Das Luftzufuhrsystem nach Anspruch 7, **dadurch gekennzeichnet, dass** ein zweiter motorgesteuerter Druckregler (3) zum Regeln des einstellbaren Steuerdrucks des ersten pilotgesteuerten Druckreglers (2) vorgesehen ist.

9. Das Luftzufuhrsystem nach Anspruch 7 oder 8, **dadurch gekennzeichnet, dass** der erste pilotgesteuerte Druckregler (2) eine Kraftvergrösserungsvorrichtung (45) zum Vergrössern einer durch den Steuerdruck beaufschlagten Belastung umfasst.

10. Ein Verfahren zum Zuführen von Luft an einer Luftwebmaschine mit einem Luftzufuhrsystem (1), wobei das Luftzufuhrsystem (1) einen ersten pilotgesteuerten Druckregler (2) umfasst, **dadurch gekennzeichnet, dass** eine Steuergrösse für den ersten pilotgesteuerten Druckregler (2) durch eine offene Regelkreissteuereinheit (21) in Abhängigkeit von Kalibrierdaten gesteuert wird.

11. Das Verfahren nach Anspruch 10, wobei weiter ein Förderdruck an dem ersten Druckregler (2) gemessen wird und die Steuergrösse an dem ersten Druckregler (2) in Abhängigkeit von dem gemessenen Förderdruck geregelt wird.

12. Das Verfahren nach Anspruch 10 oder 11, **dadurch gekennzeichnet, dass** weiter ein Luftstrom durch den ersten Druckregler (2) bestimmt wird und die Steuergrösse für den ersten Druckregler (2) in Abhängigkeit von dem bestimmten Luftstrom adjustiert wird.

13. Das Verfahren nach einem der Ansprüche 10 bis 12, **dadurch gekennzeichnet, dass** das Luftzufuhrsystem (1) zum Bestimmen von Werten für einen Ausgangsdruck in Abhängigkeit von variierten Förderdrücken, variierten Luftströmen und/oder variierten Steuergrössen für den Druckregler (2) kalibriert wird, wobei Kalibrierdaten gespeichert werden und die Kalibrierdaten zum Bestimmen der Steuergrösse an dem Druckregler (2) in Abhängigkeit von dem gemessenen Förderdruck und/oder einem bestimmten Luftstrom und/oder den Kalibrierdaten verwendet werden, so dass ein gewünschter Ausgangsdruck erreicht wird.

14. Das Verfahren nach einem der Ansprüche 10 bis 13, **dadurch gekennzeichnet, dass** Webbedingungen bestimmt werden und der gewünschte Ausgangsdruck an die Webbedingungen angepasst wird.

15. Das Verfahren nach Anspruch 14, **dadurch gekennzeichnet, dass** ein gemessener Förderdruck mit dem gewünschten Ausgangsdruck zum Bestimmen eines Abfalls des Förderdrucks unter den eingestellten gewünschten Ausgangsdruck verglichen wird, wobei der eingestellte gewünschte Ausgangsdruck nicht geändert oder begrenzt geändert wird, wenn ein Abfall des Förderdrucks unter den eingestellten gewünschten Ausgangsdruck detektiert wird.

16. Das Verfahren nach einem der Ansprüche 10 bis 15, **dadurch gekennzeichnet, dass** der Druckregler (2) ein pilotgesteuerter Druckregler mit einem durch einen Steuerdruck belasteten Aktuator (19) ist, wobei der Steuerdruck mindestens in Abhängigkeit von dem gemessenen Förderdruck adjustiert wird.

17. Das Verfahren nach Anspruch 16, **dadurch gekennzeichnet, dass** ein motorgesteuerter Druckregler (3) zum Adjustieren des Steuerdrucks für den Druckregler (2) vorgesehen ist, und dass der motorgesteuerte Druckregler (3) mindestens in Abhängigkeit von dem gemessenen Förderdruck adjustiert wird.

## Revendications

1. Un système d'alimentation en air pour une machine à tisser à jet d'air, lequel système d'alimentation en air (1) comprend un premier régulateur de pression pilote commandé (2), **caractérisé en ce que** le système d'alimentation en air (1) comprend une unité de commande (21) arrangée pour commander une variable de commande pour le premier régulateur de pression pilote commandé (2) en fonction des données de calibrage.

2. Le système d'alimentation en air selon la revendication 1, **caractérisé en ce que** le système d'alimentation en air (1) comprend en outre au moins un détecteur de pression (15) pour mesurer une pression d'alimentation vers le premier régulateur de pression pilote commandé (2), dans lequel l'unité de commande en boucle ouverte (21) est arrangée pour adapter la variable de commande pour le premier régulateur de pression pilote commandé (2) en fonction de la pression d'alimentation mesurée.

3. Le système d'alimentation en air selon la revendication 1 ou 2, **caractérisé en ce que** le système d'alimentation en air (1) comprend en outre un appareil (30) pour déterminer un courant d'air à travers le premier régulateur de pression pilote commandé (2), dans lequel l'unité de commande en boucle ouverte (21) est arrangée pour ajuster la variable de commande pour le régulateur de pression pilote commandé (2) en fonction du courant d'air déterminé.

4. Le système d'alimentation en air selon l'une quelconque des revendications 1 à 3, **caractérisé en ce que** l'unité de commande en boucle ouverte (21) comprend un élément de stockage (68) dans lequel des données de calibrage sont stockées et arrangé pour adapter la variable de commande du régulateur de pression (2) en fonction de la pression d'alimentation mesurée et/ou du courant d'air déterminé et/ou des données de calibrage, de telle sorte qu'une pression de sortie désirée est atteinte.

5. Le système d'alimentation en air selon l'une quelconque des revendications 1 à 4, **caractérisé en ce qu'**un dispositif de réglage (67) est prévu pour régler une pression de sortie désirée en fonction des conditions de tissage, particulièrement en fonction d'un moment d'arrivée réel d'un fil de trame inséré.

6. Le système d'alimentation en air selon la revendication 5, **caractérisé en ce que** le dispositif de réglage (67) comprend une unité d'opérateur relationnel (68) pour comparer une pression d'alimentation mesurée à la pression de sortie réglée désirée et pour détecter une chute de la pression d'alimentation inférieur à la pression de sortie réglée désirée, dans lequel le dispositif de réglage (67) est arrangé à ne plus changer ou à seulement changer dans des limites la pression de sortie réglée désirée, si une chute de la pression d'alimentation inférieure à la pression de sortie réglée désirée est détectée.

7. Le système d'alimentation en air selon l'une quelconque des revendications 1 à 6, **caractérisé en ce que** le premier régulateur de pression (2) est un régulateur de pression pilote commandé avec une pression pilote réglable par une variable de commande.

8. Le système d'alimentation en air selon la revendication 7, **caractérisé en ce qu'**un régulateur de pression commandé par un moteur (3) est prévu pour régler la pression pilote réglable du premier régulateur de pression pilote commandé (2).

9. Le système d'alimentation en air selon la revendication 7 ou 8, **caractérisé en ce que** le premier régulateur de pression pilote commandé (2) comprend un dispositif élargissant de force (45) pour élargir une charge appliquée par la pression pilote.

10. Un procédé pour alimenter d'air à une machine à tisser à jet d'air avec un système d'alimentation en air (1), le système d'alimentation en air (1) comprenant un premier régulateur de pression pilote commandé (2), **caractérisé en ce qu'**une variable de commande pour le premier régulateur de pression pilote commandé (2) est commandé par une unité de commande en boucle ouverte (21) en fonction des données de calibrage.

11. Le procédé selon la revendication 10, dans lequel en outre une pression d'alimentation vers le premier régulateur de pression (2) est mesurée et la variable de commande vers le premier régulateur de pression (2) est réglée en fonction de la pression d'alimentation mesurée.

12. Le procédé selon la revendication 10 ou 11, **caractérisé en ce qu'**en outre un courant d'air est déterminé à travers du premier régulateur de pression (2) et la variable de commande pour le premier régulateur de pression (2) est ajustée en fonction du courant d'air déterminé.

13. Le procédé selon l'une quelconque des revendications 10 à 12, **caractérisé en ce que** le système d'alimentation en air (1) est calibré pour déterminer des valeurs pour une pression de sortie en fonction des pressions d'alimentation variées, des courants d'air variés et/ou des variables de commande variées pour le régulateur de pression (2), dans lequel des données de calibrage sont stockées et les données de calibrage sont utilisées pour déterminer la variable de commande vers le régulateur de pression (2) en fonction de la pression d'alimentation mesurée et/ou du courant d'air déterminé et/ou des données de calibrage, de telle sorte qu'une pression de sortie désirée est atteinte.

14. Le procédé selon l'une quelconque des revendications 10 à 13, **caractérisé en ce que** des conditions de tissage sont déterminées et la pression de sortie désirée est correspondue aux conditions de tissage.

15. Le procédé selon la revendication 14, **caractérisé en ce qu'**une pression d'alimentation mesurée est comparée à la pression de sortie désirée pour déterminer une chute de la pression d'alimentation inférieur à la pression de sortie réglée désirée, dans lequel la pression de sortie réglée désirée n'est pas changée ou change dans des limites si une chute de la pression d'alimentation inférieure à la pression de sortie réglée désirée est détectée.

16. Le procédé selon l'une quelconque des revendications 10 à 15, **caractérisé en ce que** le régulateur de pression (2) est un régulateur de pression pilote commandé avec un actionneur (19) chargé par une pression pilote, dans lequel la pression pilote est ajustée au moins en fonction de la pression d'alimentation mesurée.

17. Le procédé selon la revendication 16, **caractérisé en ce qu'**un régulateur de pression commandé par un moteur (3) est prévu pour ajuster la pression pilote pour le régulateur de pression (2) et **en ce que** le régulateur de pression commandé par un moteur (3) est ajusté au moins en fonction de la pression d'alimentation mesurée.
